(19) Europäisches Patentamt / European Patent Office / Office européen des brevets

(11) **EP 2 176 877 B1**

(12) **FASCICULE DE BREVET EUROPEEN**

(45) Date de publication et mention de la délivrance du brevet:
**22.02.2012 Bulletin 2012/08**

(21) Numéro de dépôt: **08828039.1**

(22) Date de dépôt: **02.07.2008**

(51) Int Cl.:
*H01J 35/10* (2006.01)    *H01J 35/14* (2006.01)
*H01J 35/02* (2006.01)    *H01J 37/00* (2006.01)
*H05G 1/02* (2006.01)    *G21K 1/00* (2006.01)
*G01N 23/00* (2006.01)    *G01B 15/00* (2006.01)

(86) Numéro de dépôt international:
**PCT/FR2008/000946**

(87) Numéro de publication internationale:
**WO 2009/024669 (26.02.2009 Gazette 2009/09)**

(54) **DISPOSITIF DE DELIVRANCE D'UN FAISCEAU DE RAYONS X A HAUTE ENERGIE**

SYSTEM ZUR VERABREICHUNG EINES HOCHENERGETISCHEN RÖNTGENSTRAHLS

DEVICE FOR PROVIDING A HIGH ENERGY X-RAY BEAM

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **02.07.2007 FR 0756227**

(43) Date de publication de la demande:
**21.04.2010 Bulletin 2010/16**

(73) Titulaire: **Xenocs**
**38360 Sassenage (FR)**

(72) Inventeurs:
• **HOGHOJ, Peter**
**F-38950 Saint Martin Le Vinoux (FR)**
• **BOULEE, Pascal**
**F-38640 Claix (FR)**
• **NTOVA, Paraskevi**
**F-38600 Fontaine (FR)**
• **RODRIGUES, Sergio**
**F-38340 Voreppe (FR)**

(74) Mandataire: **Tetaz, Franck Claude Edouard et al**
**Cabinet Regimbeau**
**139, rue Vendôme**
**69477 Lyon Cedex 06 (FR)**

(56) Documents cités:
EP-A- 1 462 794    EP-A2- 1 273 906
WO-A-03/048745    WO-A-2004/001769
DE-A1-102004 005 937    DE-B1- 2 716 079
US-A- 4 972 449    US-A1- 2006 013 364
US-B1- 6 456 688

**Description**

DOMAINE DE L'INVENTION

La présente invention concerne le domaine de l'instrumentation analytique par rayons X (RX). Elle concerne plus précisément un dispositif de délivrance d'un faisceau de rayons X à haute énergie, typiquement supérieure à 4 keV, pour des applications analytiques par rayons X.

ETAT DE LA TECHNIQUE

L'invention s'applique à l'instrumentation analytique rayons X de natures diverses (diffraction rayons X, fluorescence rayons X, diffusion aux petits angles, réflectométrie), appliquée notamment à la recherche de matériaux ou à la métrologie par rayons X pour la fabrication de semi-conducteurs.

A titre d'exemple d'instrumentation rayons X appliquée à la recherche de matériaux on peut citer les applications comme la cristallographie des protéines, ou encore l'analyse de nano-matériaux par diffusion aux petits angles.

On peut également citer pour les applications de métrologie pour fabrication de semi-conducteurs les applications telles que les mesures d'épaisseurs, de rugosité de couches minces ou d'empilement de couches minces par réflectométrie rayons X, l'analyse de texture de couches minces cristallines ou polycristallines par diffraction de rayons X, ou encore l'analyse de motifs de lithographie (dimensions critiques, profils de gravure) par diffusion aux petits angles.

De tels domaines d'applications nécessitent un faisceau rayons X avec des propriétés de faisceaux parfaitement définies en termes de distribution angulaire (divergence ou convergence), spatiale, spectrales avec des contraintes d'encombrement dans l'espace strictes (intégration à un équipement industriel).

Il a d'abord été développé des systèmes de délivrance de rayons X, comprenant une source de rayons X à micro-foyer (d'une taille typiquement inférieure à 50 micromètres), la source étant couplée à une optique rayons X (monochromateur par exemple) permettant un conditionnement particulier du faisceau émis par la source. Néanmoins, de tels systèmes offrent une brillance limitée, notamment à cause de la source à micro-foyer utilisée qui est une source à anode fixe (tubes scellés), et qui ne permet pas en conséquence de fonctionner à haute puissance.

Or, la performance des systèmes de délivrance de faisceau rayons X pour les applications décrites ci-dessus est directement liée à la brillance de la source. On définit la brillance de la source comme la quantité de photons émise par la source dans l'angle solide unité par unité de temps par unité de surface du foyer apparent de la source pour des énergies définies par une largeur spectrale donnée (unités $ph/s/mm^2/mrad^2$/unité de largeur spectrale).

En particulier, des applications telles que la cristallographie des protéines (analyse de cristaux à haut débit) ou des applications de métrologie de couches minces pour fabrication de semi-conducteurs nécessitent des niveaux de flux utile qui sont d'un ordre de grandeur plus élevé que ceux obtenus à l'aide de systèmes de délivrance de faisceaux de rayons X basés sur des tubes scellés.

Il a donc été proposé d'utiliser des ensembles sources-optiques rayons X utilisant des sources à anodes tournantes. Un couplage source-optique pour ce type d'applications est notamment décrit dans US 6,823,042.

Les sources à anode tournante de l'art antérieur intègrent des canons à électrons fonctionnant à haute puissance (typiquement de 700 W (Watts) à 2kW) focalisant sur la cible rayons X située sur la tranche de l'anode tournante des faisceaux électroniques selon une forme allongée dont la plus petite dimension est typiquement comprise entre 70 et 100 micromètres (la deuxième dimension étant typiquement 5 à 10 fois plus élevée que la petite dimension).

Les puissances utilisées permettent d'obtenir une brillance satisfaisante pour les applications considérées. Toutefois, il convient de refroidir l'anode pour éviter qu'elle n'entre en fusion ou en sublimation. C'est pourquoi, outre l'entrainement en rotation de l'anode qui permet de limiter l'échauffement, il est nécessaire de prévoir un système de refroidissement. Ainsi, le système proposé dans US 6,823,042 intègre un système de refroidissement à l'eau de l'anode tournante (par convection forcée d'un liquide caloporteur à l'intérieur de l'anode) avec un système de mise en rotation à roulements.

Notons d'abord que la brillance d'une telle configuration reste limitée puisque l'utilisation d'un système de roulements limite la vitesse de rotation et donc la vitesse de défilement de la cible rayons X sous le flux électronique.

De plus, de telles sources peuvent présenter des problèmes de fiabilité pouvant être occasionnés par des fuites au niveau des joints d'isolation du système de refroidissement. Ces fuites peuvent notamment dégrader les roulements des systèmes de motorisation. Pour palier à de tels problèmes d'étanchéité les anodes tournantes refroidies à l'eau nécessitent des mécanismes évolués (détecteurs de fuite par exemple) tels que décrits dans US 2006/0013364 pouvant occasionner des maintenances fréquentes et/ou des coûts additionnels importants sur le système.

De telles contraintes constituent un problème majeur pour des systèmes de délivrance de faisceau rayons X intégrés à des équipements de métrologie pour contrôle de procédés de fabrication de semi-conducteurs. En effet pour ce type d'applications, il n'est prévu que un ou deux cycles de maintenance par an, qui sont de surcroit très courts (quelques heures), et prévoir des maintenances supplémentaires pour le remplacement de joints d'isolation sur le système à anode tournante entrainerait une baisse de productivité importante.

Un but de la présente invention est donc de proposer un dispositif de délivrance d'un faisceau de rayons X à haute énergie pour les applications considérées permettant de résoudre au moins l'un des inconvénients précités.

Un but de la présente invention est plus particulièrement de proposer un dispositif permettant de délivrer un faisceau à haute brillance, le système étant très fiable, de manière à réduire les cycles de maintenance.

Un autre but de la présente invention est de proposer un dispositif permettant de réduire les coûts d'utilisations et de fonctionnement du dispositif.

EXPOSE DE L'INVENTION

A cette fin on propose un dispositif de délivrance d'un faisceau de rayons X à des énergies supérieures à 4keV, comprenant :

- une source de rayons X comprenant un canon à électrons adapté pour générer un faisceau continu d'électrons sur une région cible d'une anode pour une émission de rayons X par l'anode,

    o ladite anode formant une pièce de révolution d'un diamètre compris entre 100 et 250 millimètres, et étant montée solidaire d'un arbre moteur de manière à être entrainée en rotation par un système de mise en rotation,
    o le canon à électrons et l'anode étant agencés dans une enceinte sous vide, ladite enceinte comprenant une fenêtre de sortie pour transmettre un faisceau de rayons X émis par l'anode en dehors de l'enceinte,

- un moyen de conditionnement du faisceau de rayons X émis à travers la fenêtre de sortie, le moyen de conditionnement comprenant une optique rayons X adaptée pour conditionner le faisceau de rayons X émis selon un effet optique bidimensionnel,

caractérisé en ce que

- le canon à électrons est prévu pour émettre un faisceau d'électrons d'une puissance inférieure à 400 watts, et comprend des moyens pour focaliser ledit faisceau d'électrons sur la région cible selon une forme sensiblement allongée définie par une petite dimension et une grande dimension, la petite dimension étant comprise entre 10 et 30 micromètres et la grande dimension étant 3 à 20 fois plus grande que la petite dimension,
- l'anode tournante comprend un système de refroidissement par émission pour évacuer par rayonnement une partie d'énergie transmise par le faisceau d'électrons à l'anode,
- le système de mise en rotation comprend un rotor d'une pompe turbomoléculaire assurant un vide secondaire dans au moins une partie de l'enceinte et comprend un moteur à paliers magnétiques prévu pour une mise en rotation de l'anode tournante à une vitesse supérieure à 20 000 tours/minute, et
- la fenêtre de sortie est agencée de manière à transmettre un faisceau de rayons X émis par l'anode de sorte que le faisceau de rayons X émis vers le moyen de conditionnement soit défini par un foyer sensiblement ponctuel de dimension correspondant sensiblement à la petite dimension de la forme de la région cible.

Le dispositif présenté permet d'émettre un faisceau de rayons X en sortie de la source caractérisé par un foyer quasi ponctuel de petite taille (micro-foyer). Comme on le verra plus loin, cela permet d'augmenter la densité de puissance électronique sur la cible, et donc la brillance du faisceau de rayons X correspondant.

De plus la focalisation du faisceau d'électrons se produisant sur une petite zone cible, cela permet de réduire la puissance de fonctionnement du canon à électron, et donc les coûts d'utilisation du système (consommation d'électricité, émission de $CO_2$). Cela limite également l'échauffement au niveau de l'anode.

En outre la focalisation du faisceau d'électrons selon une forme allongée permet de répartir d'autant l'échauffement de la région cible.

Le dispositif permet donc de limiter l'échauffement de l'anode, ce qui permet d'utiliser un système de refroidissement de l'anode moins performant qu'un système de refroidissement à l'eau en termes d'évacuation thermique, mais qui est beaucoup plus fiable, notamment pour un entrainement en rotation de l'anode à très haute vitesse.

Des aspects préférés mais non limitatifs du dispositif de délivrance d'un faisceau de rayons X selon l'invention sont les suivants :

- l'optique rayons X est une optique à simple réflexion ;
- l'optique rayons X est courbée selon deux directions orthogonales de manière à produire un effet optique bidimensionnel par simple réflexion ;
- l'optique rayons X comprend un revêtement multicouche ;

- la fenêtre de sortie est agencée dans l'enceinte de manière à transmettre un faisceau de rayons X dont la direction moyenne forme un angle par rapport au plan moyen de la région cible compris entre 3° et 20°, et préférentiellement entre 6° et 12° ;
- le canon à électrons est agencé de sorte que le faisceau d'électrons soit sensiblement parallèle à l'arbre moteur ;
- le canon à électrons est agencé du même côté que le système de mise en rotation ;
- l'anode a une forme sensiblement cylindrique définie par deux surfaces circulaires formant les bases de l'anode, les deux surfaces étant réunies par une paroi latérale formant la tranche de l'anode, le canon à électrons étant agencé de manière à focaliser le faisceau d'électrons sur l'une des deux bases l'anode ;
- l'anode comprend une portion inclinée au niveau de la région cible de sorte que le faisceau de rayons X soit collecté par les moyens de conditionnement selon une direction moyenne sensiblement perpendiculaire à l'axe de rotation de l'anode ;
- le moyen de conditionnement est agencé de sorte que la direction moyenne du faisceau de rayons X collecté par l'optique soit sensiblement radiale par rapport à la surface de l'anode ;
- le canon à électrons comprend des moyens pour focaliser le faisceau d'électrons de sorte que la grande dimension de la région cible soit radiale par rapport à la base de l'anode, et que la petite dimension soit tangente par rapport à la base de l'anode ; ainsi, le canon à électrons comprend des moyens pour focaliser le faisceau d'électrons de sorte que la grande dimension de la région cible soit disposée radialement par rapport à l'anode de manière à ce que la rotation de l'anode se fasse dans le sens de la petite dimension ;
- le moyen de conditionnement est agencé de sorte que l'entrée de l'optique rayons X soit placée à une distance du foyer de la source de rayons X comprise entre 10 et 30 millimètres ;
- le dispositif comprend un moyen d'obturation du faisceau de rayons X disposé à la sortie de l'optique rayons X ;
- l'anode comprend une couche de diamant agencée sous la cible définie par la région cible ;
- l'anode a une cible ayant une épaisseur inférieure à 5 $\mu$m ;
- le dispositif comprend en outre des moyens de contrôle de la position du foyer, et un système d'asservissement comprenant des moyens de déplacement de l'optique rayons X, les moyens de déplacement étant aptes à modifier le positionnement de l'optique rayons X par rapport au foyer en fonction de la variation de la position du foyer déterminée par les moyens de contrôle ;
- le dispositif comprend en outre une chambre d'ionisation disposée en sortie de l'optique rayons X.

L'invention concerne également un système de métrologie par rayons X pour un échantillon, comprenant un dispositif de délivrance d'un faisceau de rayons X tel que décrit ci-dessus, caractérisé en ce que le dispositif est monté en rotation autour d'un axe confondu avec l'arbre moteur et parallèle à un plan moyen de l'échantillon.

On prévoit aussi un système de métrologie par rayons X pour un échantillon, comprenant un dispositif de délivrance d'un faisceau de rayons X tel que décrit ci-dessus, caractérisé en ce que le système de délivrance de faisceau rayons X est positionné de telle sorte que l'arbre moteur de l'anode soit sensiblement parallèle à un plan moyen de l'échantillon.

DESCRIPTION DES FIGURES

D'autres caractéristiques et avantages ressortiront encore de la description qui suit, laquelle est purement illustrative et non limitative et doit être lue en regard des figures annexées parmi lesquelles :

- La figure 1 est une représentation schématique d'un dispositif de délivrance d'un faisceau de rayons X à haute énergie selon l'invention ;
- La figure 2a est une illustration de l'angle d'élévation défini par rapport à la région cible d'une anode ayant une forme cylindrique ;
- La figure 2b est une illustration de l'angle d'élévation défini par rapport à la région cible d'une anode ayant une forme cylindrique avec un rebord périphérique incliné ;
- La figure 3 est une vue de dessus de l'anode avec la représentation de la région cible ;
- La figure 4 est une vue en coupe d'une anode selon un mode de réalisation particulier ;
- La figure 5 est une représentation schématique de la source rayons X selon un mode de réalisation d'une configuration dite parallèle ;
- La figure 6 est une représentation schématique de la source rayons X selon un autre mode de réalisation d'une configuration dite parallèle ;
- La figure 7 est une représentation schématique d'un dispositif de délivrance d'un faisceau de rayons X à haute énergie selon l'invention illustrant l'angle de collection de l'optique suivant la direction méridionale ;
- La figure 8 est une représentation schématique d'un dispositif de délivrance d'un faisceau de rayons X à haute énergie selon l'invention illustrant l'angle de collection de l'optique suivant la direction sagittale ;

- La figure 9 est une représentation schématique de l'utilisation horizontale du dispositif pour lequel la source rayons X est agencée selon une configuration parallèle, pour une utilisation permettant de faire varier l'angle d'incidence du faisceau de rayons X sur un échantillon disposé également de manière horizontale.

DESCRIPTION DETAILLEE DE L'INVENTION

Il convient tout d'abord de noter qu'un faisceau monochromatique au sens de l'invention est un faisceau dont la distribution par unité spectrale est sensiblement centrée sur une énergie caractéristique (Ec) et pour laquelle la distribution en énergie ($\Delta$E) est inférieure à quelques pourcents ($\Delta$E/Ec est inférieure à quelques pourcents). Le faisceau pourra également comprendre au plus 1 à 2% de rayonnement parasite (autres énergies caractéristiques telles que les énergies Kbeta du Cuivre et le rayonnement de freinage qui est une caractéristique intrinsèque de la cible rayons X).

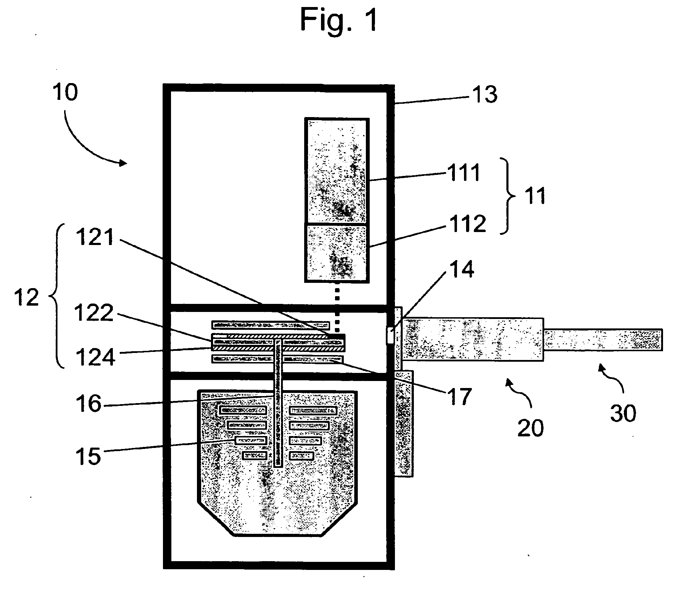

Comme illustré à la figure 1, on propose un dispositif de délivrance de faisceau rayons X à haute énergie (typiquement supérieure à 4 keV) intégrant une source 10 de rayons X à émission continue, et une optique rayons X 20 pour conditionner le faisceau de rayons X émis par la source 10, de préférence selon un effet optique bidimensionnel.

Ce type de source se différentie des sources à anodes tournantes utilisées dans le domaine médical qui sont basées sur un cycle de fonctionnement discontinu alternant les temps d'exposition (quelques secondes) et les cycles de refroidissement (quelques minutes) nécessaires pour évacuer la chaleur accumulée pendant le temps d'exposition. Ces anodes utilisent typiquement des puissances électroniques beaucoup plus élevées (parfois plusieurs dizaines à centaines de kWatts) mais fonctionnent selon un régime discontinu de sollicitation thermique et mécanique de l'anode.

Dans le cas de l'invention, comme dans le cas des anodes tournantes classiques utilisées dans le domaine de l'instrumentation analytique rayons X, la source 10 fonctionne en continu. En effet le domaine d'application de l'invention nécessite des taux d'utilisation important des équipements associés (applications à flux tendu comme pour la métrologie des semi-conducteurs). Par ailleurs certaines applications de recherche peuvent nécessiter des temps d'exposition des échantillons aux faisceaux de rayons X qui sont typiquement de plusieurs heures voir plusieurs jours pour un même échantillon (comme pour la cristallographie des protéines). Même en cas de pause de l'utilisateur ou en cas de changement d'échantillons, les sources rayons X sont typiquement maintenues à leur puissance nominale ou à des puissances réduites (c'est-à-dire à une puissance réduite d'environ 80% par rapport à la puissance nominale) (un obturateur de sécurité positionné en sortie de la source ou de l'optique rayons X est alors maintenu en position fermée pour bloquer le faisceau de rayons X émis).

La source rayons X à anode tournante utilisée émet des rayons X à haute énergie adaptés pour l'instrumentation RX (diffraction RX, fluorescence RX). Par haute énergie, on entend des énergies d'émissions rayons X supérieures à 4 keV, et préférentiellement comprises entre 4 et 25 keV. Les sources rayons X utilisées sont typiquement basées sur des cibles rayons X à bases de Cuivre, Molybdène, Argent, Chrome (générations de rayons X à partir de l'excitation des électrons de la couche K de ces atomes) ou encore du Tungstène (générations de rayons X à partir de l'excitation des électrons de la couche L du Tungstène).

Comme il a déjà été indiqué, la performance (flux utile en respectant les conditions de divergences, de puretés spectrales et d'encombrement) des systèmes de délivrance de faisceaux rayons X pour des applications analytiques rayons X est directement proportionnelle à la brillance de la source.

La brillance de la source dépend de la densité de puissance électronique sur la cible, c'est à dire de la puissance du faisceau électronique par unité de surface de la cible rayons X exposée à ce faisceau.

Or, il est possible d'augmenter la densité de puissance électronique sur la cible en réduisant la taille de foyer de la source en raison d'une meilleure dissipation thermique. In en ressort que la focalisation du faisceau d'électrons sur la région cible avec une forme d'impact de faibles dimensions permet d'obtenir des densités de puissance élevées, et de réduire la puissance totale utile du canon à électrons ce qui présente des avantages en terme de coût d'utilisation du système et d'environnement.

La source 10 de rayons X utilisée dans le dispositif de l'invention consiste à coupler un canon à électrons 11 à faible puissance avec une anode tournante 12 selon un agencement et un mode de fonctionnement particuliers pour émettre un faisceau de rayons X caractérisé par un foyer ponctuel ayant des dimensions réduites.

Les densités de puissance électroniques obtenues avec un dispositif conforme à l'invention sont comparables, voire meilleures, que les dispositifs connus fonctionnant à haute puissance. Cela ressort très clairement du tableau 1 ci-dessous.

Tableau 1

| | Puissance du canon à électrons | Dimension de la région cible (foyer apparent de la source) | Densité de puissance électronique sur la cible |
|---|---|---|---|
| Dispositif haute puissance connu | 2000 W | 70 $\mu$m x 700 $\mu$m (70 $\mu$m) | 40 kW/mm$^2$ |
| Mode de réalisation 1 de l'invention | 300 W | 30 $\mu$m x 300 $\mu$m (30 $\mu$m) | 33 kW/mm$^2$ |
| Mode de réalisation 2 de l'invention | 200 W | 20 $\mu$m x 200 $\mu$m (20 $\mu$m) | 50 kW/mm$^2$ |
| Mode de réalisation 3 de l'invention | 100 W | 10 $\mu$m x 100 $\mu$m (10 $\mu$m) | 100 kW/mm$^2$ |

Ainsi, la source 10 proposée peut être particulièrement compétitive en termes de brillance alors que les puissances du faisceau électronique requises sont 6 à 20 fois plus faibles.

Il est à noter que si la brillance est un paramètre déterminant du système de délivrance de faisceau rayons X, le choix de la taille de source adaptée dépend également fortement de l'efficacité de l'élément optique rayons X associé. En effet, à chaque application est associée une distribution optimale ou permissible de flux dans l'espace, l'espace angulaire et dans le spectre. Il faut ainsi disposer des éléments optiques efficaces pour effectuer la transformation du faisceau nécessaire.

L'invention s'appliquera notamment à des domaines d'applications privilégiés qui seront détaillés par ailleurs ainsi que les couplages sources-optiques associés.

*Puissance du canon à électrons et dimensionnement de l'anode*

Selon l'invention la source 10 comprend un canon à électrons 11 comprenant une cathode 111 et des moyens de focalisation 112 permettant de focaliser un faisceau d'électron sur une région cible 121 d'une anode tournante 12. L'anode 12 et le canon à électrons11 sont placés dans une enceinte sous vide 13.

Comme on l'a déjà indiqué, le canon à électrons 11 est prévu pour fonctionner à de faibles puissances, typiquement inférieures à 400 watts (W). On précise que cette puissance correspond à la puissance du faisceau électronique impactant l'anode. Le canon à électrons 11 comprend une cathode 111 émettant un faisceau électronique d'une section donnée.

Le canon à électrons 11 inclut des moyens de focalisation 112 du faisceau électronique extrait de la cathode 111 pour focaliser le faisceau d'électron sur une région cible 121 de l'anode 12 selon une forme particulière. Plus précisément, la forme de la région cible 121 sera sensiblement allongée (elliptique par exemple) ce qui permet une meilleure répartition de l'énergie transmise par le faisceau électronique au niveau de la cible, et donc une meilleure répartition de l'échauffement correspondant.

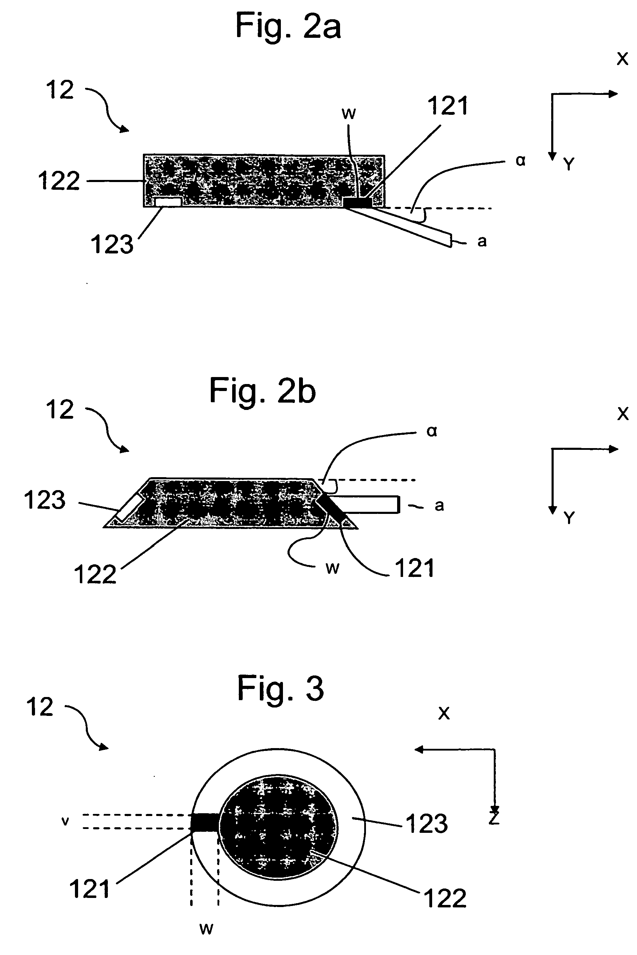

La forme allongée de la région cible peut se caractériser globalement par une petite dimension (v) et une grande dimension (W) (voir figure 3). Ces dimensions peuvent par exemple correspondre respectivement au petit axe et au grand axe dans le cas d'une forme elliptique. La petite dimension sera choisie typiquement entre 10 et 30 micromètres ($\mu$m), la grande dimension pouvant être 3 à 20 fois plus grande que la petite dimension.

L'anode 12 étant entrainée en rotation, la cible 123 correspondante sur l'anode est plus étendue que la région cible 121 de focalisation du faisceau électronique. Cette cible 123 aura typiquement la forme d'un anneau comme on peut le voir à la figure 3. La cible aura de préférence une surface correspondant à la surface utile générée par la forme de la région cible 121 et la rotation de l'anode 12. On pourra toutefois prévoir également une cible 123 de dimensions plus importante, avec une largeur d'anneau plus importante que la largeur de la région cible 121, de manière à faciliter la mise en oeuvre de la cible 123 sur le support de cible 122. Dans un mode de réalisation particulier, la cible 123 et le support 122 sont confondus, de sorte que l'ensemble de l'anode 12 pourrait servir de cible. Comme on l'a déjà dit plus haut, la cible 123 est formée dans un matériau adapté aux caractéristiques rayons X désirées.

De manière préférée, l'anode 12 forme une pièce de révolution avec un diamètre compris entre 100 et 250 mm. On utilisera par exemple une anode 12 ayant une forme sensiblement cylindrique définie par deux surfaces circulaires formant les bases de l'anode, les deux surfaces étant réunies par une paroi latérale formant la tranche de l'anode. Dans ce cas, la cible 123 de rayons X se présentera typiquement sous la forme d'un anneau disposé en périphérie de l'anode (voir figures 2a et 3). Selon un autre mode de réalisation, l'anode 12 aura une surface périphérique inclinée comme illustré à la figure 2b. Selon un mode de réalisation, cette portion inclinée est formée par la géométrie de l'une des surfaces formant les bases de l'anode. Selon un autre mode de réalisation, l'anode est formée de sorte que la tranche de l'anode forme ladite portion inclinée.

Le centre de la cible de rayons X qui sera effectivement exposé au faisceau électronique pourra être situé proche du bord de l'anode (typiquement à moins de 10 mm) afin de pouvoir minimiser la distance entre le foyer caractérisant le faisceau de rayons X émis par la source, et l'optique rayons X dans le but d'augmenter l'angle de collection de l'optique.

L'impact du faisceau d'électrons sur la cible de l'anode 12 entraine une émission de rayons X suivant toutes les directions depuis la surface de l'anode 12.

On prévoit une fenêtre de sortie 14 ménagée dans l'enceinte 13 pour permettre une transmission d'un faisceau de rayons X, ce faisceau de rayons X étant caractérisé par une direction moyenne de propagation. La fenêtre de sortie pourra être une fenêtre de béryllium par exemple.

On appelle angle d'élévation $\alpha$, ou angle de take-off, l'angle que fait la direction moyenne du faisceau de rayons X qui traverse la fenêtre de sortie et est collecté par l'optique rayons X, avec le plan moyen de la région cible d'où est issue le faisceau de rayons X.

Les figures 2a, 2b et 3 illustrent l'angle d'élévation $\alpha$ et le facteur de réduction de la grande dimension (W) de la région cible pour une collection selon un tel angle. La taille de dimension apparente du foyer de la source pour l'optique placée en avale correspond à la taille (a).

L'utilisation d'un angle d'élévation $\alpha$ compris entre 3° et 20° permet d'obtenir un foyer sensiblement ponctuel de diamètre apparent (a) pour l'ensemble optique placé en aval de la source à partir d'une zone de cible rayons X illuminée par le faisceau électronique selon un profil allongé avec une grande dimension (W) et une petite dimension (v). L'utilisation de cet angle d'élévation rasant est critique pour le domaine d'application de l'invention car il permet d'obtenir un faisceau de rayons X en sortie de la source rayons X caractérisée par un foyer quasi-ponctuel à partir d'une région cible de forme allongée.

Il est à noter que l'angle d'élévation $\alpha$ a un impact sur l'intensité du faisceau rayons X pouvant être collecté par l'ensemble optique bidimensionnel 20. En effet l'intensité émise par un point de la cible varie selon l'angle d'élévation (l'intensité émise augmente avec l'angle d'élévation, cette intensité atteignant une valeur seuil à partir d'un angle d'élévation de l'ordre de 10° à 20° selon l'énergie considérée et le matériau de la cible). Un angle d'élévation compris entre 3° et 20° permet d'assurer un bon compromis entre l'intensité du faisceau émis par la cible 121 et la réduction de zone d'émission assurant un foyer sensiblement ponctuel pour l'optique 20 ainsi qu'une bonne répartition de la charge thermique à la surface de la cible. Selon une application privilégiée de l'invention, l'ensemble optique 20 sera disposé en aval de la source selon un angle d'élévation compris entre 6° et 12° ce qui assure ainsi une réduction de la grande dimension W de la région cible d'un facteur compris entre 5 et 10.

Il est à noter qu'un angle d'élévation de 15° à 20° (plus faible réduction de grande dimension W) pourra être privilégié dans le cas où la focalisation du canon à électron 11 est rendue délicate et ne permet pas d'atteindre une section du faisceau électronique à forte asymétrie (par exemple de 30 $\mu$m par 300 $\mu$m). On préférera dans ce cas une moindre asymétrie du faisceau électronique tout en augmentant la densité de faisceau électronique pour maintenir un niveau de brillance élevé.

Comme cela est illustré sur la figure 2b l'angle d'élévation $\alpha$ peut-être obtenu par le biais d'une inclinaison locale de l'anode 12 au niveau de la cible 123. Cette inclinaison $\alpha$ de la cible 123 permet de collecter le faisceau de rayons X en aval de la source selon une direction sensiblement perpendiculaire à l'axe de rotation.

La focalisation particulière du faisceau d'électrons, sur une région cible ayant une forme allongée de faible dimension, et le positionnement particulier de la fenêtre de sortie, permet d'obtenir une source émettant un faisceau de rayons X caractérisé par un foyer source apparaissant comme ponctuel pour l'optique rayons X placée en aval de la source.

Il existe un échauffement au niveau de la région cible 121 de l'anode 12 même si celui-ci est limité par la forme allongée de la région cible, et par la faible puissance du faisceau électronique.

Il convient tout d'abord d'entrainer l'anode 12 en rotation à haute vitesse. En effet, une vitesse périphérique élevée permet de limiter la température crête de la cible rayons X (la température crête étant la température atteinte par la cible rayons X après passage sous le flux électronique). Cette température doit être inférieure à la température de fusion du matériau cible considéré et à la température de sublimation à la pression de l'enceinte à vide considérée (qui sera typiquement comprise en $10^{-6}$ mbar et $10^{-7}$ mbar).

Le tableau 2 met en avant l'échauffement (incrément de température dû au passage sous le flux électronique) calculé en première approximation pour une configuration de l'invention à une vitesse périphérique de 280 mètres par secondes (m/s) (200 W, 20 $\mu$m x 200 $\mu$m, vitesse de 35 000 tours/minute avec une anode de 150 mm de diamètre), et la compare à une configuration classique de source (1200 W, 70 $\mu$m x 700 $\mu$m, vitesse de 12 000 tours/minute avec une anode de 100 mm de diamètre).

Tableau 2

| | Puissance du canon à électrons | Dimension de la région cible | Estimation de l'incrément de température ΔT |
|---|---|---|---|
| Dispositif haute puissance connu | 1200 W | 70 μm x 700 μm | 820˚C |
| Mode de réalisation 2 de l'invention | 200 W | 20 μm x 200 μm | 184˚C |

Le calcul d'incrément pour le mode de réalisation de l'invention a été effectué en tenant compte d'une profondeur d'échauffement de 6 μm. En ce qui concerne le dispositif haute puissance refroidi à l'eau la formule de la figure 14 de la demande de brevet US 6,823,042 a été appliquée.

Comme indiqué sur les résultats ci-dessus l'incrément de température obtenu est plus faible que pour les sources connues (pas de cycle brusque de sollicitation thermique).

Afin de mettre en oeuvre des vitesses périphériques de l'ordre de 200 m/s ou plus l'invention comprend un moteur à paliers magnétiques 15 permettant de mettre en rotation l'arbre moteur 16 supportant l'anode tournante 12 à des fréquences supérieures à 20 000 tours/minutes, l'anode tournante ayant une dimension comprise entre 100 et 250 mm.

L'utilisation d'un tel moteur permet en outre de garantir une stabilité accrue du système puisque le moteur à paliers magnétiques limite la transmission de vibrations éventuelles à l'anode. Ce type de moteur est d'autant plus avantageux que la vitesse de rotation de l'anode est élevée.

Il convient en outre d'utiliser un système de refroidissement pour permettre un refroidissement supplémentaire de l'anode 12.

Pour ce faire on propose d'utiliser un système de refroidissement par émission pour évacuer par rayonnement une partie d'énergie transmise par le faisceau d'électrons à l'anode 12. Le système de refroidissement pourra typiquement être constitué de surfaces émissives 124 correspondant à la surface du support de cible 122 ou à des revêtements émissifs disposés sur le support de cible 122 permettant d'évacuer par rayonnement une grande partie de la puissance du canon à électrons qui sera absorbée par une surface ou pièce 17 disposée face à l'anode 12, cette surface ou pièce 17 étant par ailleurs refroidie à l'eau (refroidissement par convection forcée d'un liquide caloporteur à l'intérieur de la pièce).

L'utilisation d'une anode dont la dimension est comprise entre 100 et 250 mm permet d'obtenir une surface suffisante pour évacuer une puissance maximale de l'ordre de 300 Watts à partir d'une surface émissive 124 maintenue à une température convenable (entre 300 et 600˚C) et regroupant une grande partie de l'anode.

Il pourrait également être prévu de disposer des éléments d'isolation thermique entre l'arbre moteur 16 et le support 122 pour ne pas surchauffer l'arbre moteur 16. Il est à noter que malgré l'intégration d'une partie isolante entre l'arbre et l'anode tournante une puissance de l'ordre de quelques dizaines de Watts peut être transmise à l'arbre moteur.

La cible rayon X est typiquement disposée sur un support 122 constitué d'un matériau à haute tenue mécanique et thermique (résistance au fluage). L'ensemble du bloc anode sera défini de manière à limiter les sollicitations des paliers magnétiques.

A titre d'illustration du comportement thermique de l'anode tournante telle que considérée dans l'invention, le tableau 3 permet d'identifier les variations de température moyenne (Tmoyenne) en surface d'une anode comportant une cible de Cuivre et les variations de température crête (Tcrête) en fonction du dimensionnement de l'anode (l'anode correspond à un cylindre de diamètre précisé ci-dessous et évidée selon un cylindre de diamètre de 50 mm) pour une fréquence de rotation fixée à 30 000 tours/minute. Le Cuivre est donné à titre d'illustration en raison de sa température de fusion qui est relativement basse (par rapport à des réfractaires tels que le Tunsgtène et le Molybdène).

Le tableau 3 donne une estimation de l'incrément de température et de la température moyenne en surface de l'anode nécessaire pour évacuer une puissance donnée en fonction de la surface de l'anode.

Tableau 3

| Diamètre de l'anode (mm) | Température moyenne (˚Kelvins) | Température crête ("Kelvins) | Vitesse linéaire (m/s) |
|---|---|---|---|
| 200 | 556 | 710 | 314 |
| 150 | 638 | 843 | 236 |
| 90 | 837 | 1179 | 141 |

dans lequel :

- Tmoyenne correspond à la température en surface de l'anode permettant à l'équilibre une évacuation de 300 Watts avec une surface émissive à haut pouvoir de rayonnement (haute émissivité (e) fixée à 0,9) et de surface S (S variant suivant le diamètre de l'anode), et
- Tcrête étant la température maximum atteinte par la cible de Cuivre suite à son passage sous le flux électronique.

*Système de mise en rotation de l'anode tournante*

Comme il a été indiqué plus haut, l'anode tournante 12 est préférentiellement mise en rotation par un sous module arbre moteur 16 dont le moteur 15 permet une rotation rapide à des fréquences supérieures à 20 000 tours/minute.

Selon un mode particulier de l'invention, le moteur et le système d'entraînement sont scellés au travers d'une paroi étanche. Le pompage de la source de rayons X est assuré par une pompe secondaire rattachée à une pompe primaire.

Selon l'invention, l'anode tournante 12 est mise en rotation par l'arbre moteur d'une pompe turbomoléculaire afin de faire défiler l'anode sous le flux électronique émis par le canon à électrons 11, tout en entraînant le rotor de la pompe turbomoléculaire dans le but de produire un vide secondaire dans la chambre à vide de la source rayons X. La pompe à vide qui est ainsi utilisée pour mettre en rotation l'anode tournante est préférentiellement du type pompe turbomoléculaire à paliers magnétiques.

*Disque Anode tournante*

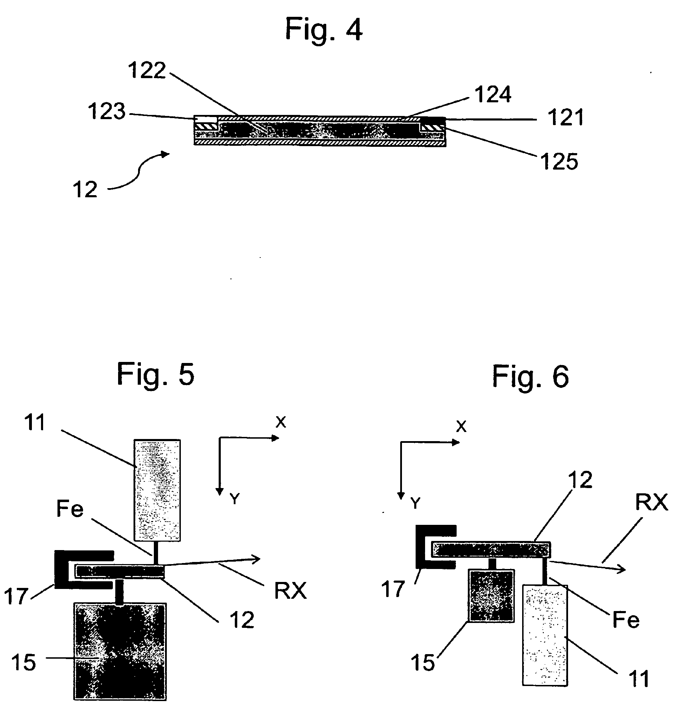

Comme illustré à la figure 4 et selon un mode de réalisation particulier, l'anode tournante 12 est constituée d'un disque composé des éléments suivants :

- d'une cible rayons X (121) destinée à émettre des rayons X avec une énergie caractéristique sous excitation par le flux électronique (par exemple des rayons X de la raie caractéristique Cuivre Kalpha),
- d'une structure support (122) (disque ou autre pièce de révolution) avec une conductivité thermique suffisante pour dissiper la chaleur sur une surface importante, et
- une surface émissive (124) (revêtements ou surface de la structure support) en surface de l'anode (dissipant la chaleur par émission infrarouge) vers des éléments refroidisseurs statiques disposés en regard de l'anode

En outre, il peut être prévu d'insérer dans l'anode une sous-couche à très haute conductivité thermique (125), sous la cible (121), pour permettre une évacuation supplémentaire de l'échauffement de la cible (121) (afin de réduire la température moyenne et la température crête de la cible (121)).

En effet, lors du passage de la cible sous le faisceau électronique, celle-ci subit un échauffement local qui peut être de plusieurs centaines de degrés (même si celui-ci est réduit par rapport à celui constaté sur les anodes tournantes classiques). Compte-tenu des températures moyennes élevées de l'anode résultant d'un refroidissement par rayonnement, il peut être avantageux de disposer sous la cible une couche à très haute conductivité thermique augmentant la capacité d'évacuation de chaleur de la cible notamment lors de l'exposition de celle-ci au flux électronique.

Selon une application privilégiée de ce mode de mise en oeuvre, la sous-couche de haute conductivité thermique 125 est une couche de diamant. Le diamant présente l'avantage d'avoir une conductivité thermique très élevée (qui peut-être 5 fois supérieure par rapport à celle du cuivre qui est un des matériaux à plus haute conductivité thermique parmi les matériaux cibles utilisés).

Dans le cas d'une utilisation de cette sous-couche à haute conductivité thermique on recherchera notamment une épaisseur très fine de la cible (121) afin de maximiser l'énergie thermique évacuée lors du temps d'exposition. On recherchera ainsi typiquement une épaisseur de la cible de l'ordre de 10 $\mu$m alors que les épaisseurs de cibles peuvent être typiquement de l'ordre de 100 $\mu$m dans les sources rayons X de l'art antérieur (pour des raisons de facilité de mise en oeuvre).

Il est à noter que la profondeur d'émission des rayons X dans la cible est typiquement comprise entre 3 et 5 $\mu$m (suivant les matériaux) pour des tensions d'accélération des électrons dans le canon à électrons de 50 à 60kV.

On pourra rechercher un compromis entre l'intensité du faisceau de rayons X émis et l'échauffement de la cible en utilisant notamment une épaisseur réduite de cible par rapport à la profondeur de génération des rayons X utile dans la cible. La recherche d'un tel compromis pourra être particulièrement avantageuse dans le cas de l'utilisation d'une couche diamant qui possède une haute conductivité thermique et ne génèrera pas de rayonnement parasite critique pour le système de délivrance de faisceau rayons X à haute énergie. En effet en réduisant la taille de la cible on pourra exposer une partie de la sous-couche au flux électronique. Or sous l'impact d'un faisceau électronique, une couche de diamant n'émet essentiellement que des rayons X de faible énergie (de l'ordre de 300 eV) qui seront par ailleurs absorbés dans l'air ou filtrés par l'élément optique 20. On pourra ainsi utiliser dans le cas d'une recherche d'un tel compromis une épaisseur de cible (121) typiquement inférieure à 5 μm.

Il est à noter que les systèmes de mises en rotation haute vitesse présentés ont une capacité d'évacuation de chaleur au niveau de l'arbre qui reste limitée et ne peuvent ainsi atteindre des températures supérieures à 100°C voir 150°C. Ainsi selon une version privilégiée de l'invention, l'anode tournante ou la structure anode tournante est reliée à un élément d'isolation thermique à faible conductivité thermique (élément isolateur ayant une conductivité de quelques W/m.K au maximum) interposé entre l'anode 12 et l'arbre moteur 16.

*Positionnement Parallèle du canon à électrons par rapport à l'axe de rotation de l'anode*

Selon un mode de réalisation particulier de l'invention, le canon à électrons 11 est positionné selon une configuration dite parallèle, de manière à pouvoir focaliser un faisceau électronique (Fe) sur la base de l'anode comme illustré sur les figures 5 et 6, et non pas sur la tranche de l'anode 12 comme cela est en général le cas pour les sources rayons X utilisées dans le domaine de l'analytique.

A ce titre l'axe du canon à électrons 11 pourra ainsi être sensiblement parallèle à l'axe de rotation 16 de l'anode tournante 12. En effet, une incidence normale du canon à électrons 11 par rapport à la cible maximise le rendement de génération des rayons X.

Il est à noter que le canon à électrons 11 pourra être incliné de quelques degrés à quelques dizaines de degrés par rapport à l'axe de rotation 16 de l'anode 12. Une telle configuration sera notamment privilégiée dans le cas où l'on cherchera un faisceau électronique de dimensions plus symétriques (ce qui peut-être plus simple en terme de mise en oeuvre du canon à électrons et de ces moyens de focalisation) mais à densité électronique élevée. L'inclinaison du faisceau électronique assure alors une exposition de la région cible (121) selon une forme allongée souhaitée pour minimiser l'échauffement de la cible.

Selon un mode de réalisation particulier illustré à la figure 6, le canon 11 est également placé de manière à ce que la faisceau d'électrons (Fe) soit parallèle à l'axe de rotation 16 de l'anode tournante 12, mais le canon à électrons 11 est placé du côté du système de mise en rotation 15. Il convient selon ce mode de réalisation, que l'anode tournante 12 ait un diamètre plus large que la base du système de mise en rotation 15 afin de permettre une intégration du canon à électron 11 du côté du système de mise en rotation 15 par rapport au plan de l'anode tournante 12.

Pour cette configuration, on choisit donc une anode tournante de diamètre agrandi par rapport au diamètre du système de mise en rotation 15 permettant de placer côte à côte le système de mise en rotation avec le canon à électrons. Typiquement l'anode peut avoir un diamètre de 200 mm pour un canon et un système de mise en rotation 15 de 100 mm de diamètre environ.

Une telle configuration permet d'améliorer la compacité du bloc source et également de réduire le poids du dispositif. En effet compte-tenu des dimensions de faisceau électronique requises sur la cible, le canon à électrons peut avoir une dimension relativement allongée (de plusieurs dizaines de centimètres) pour assurer la focalisation nécessaire, ce qui entraîne une longueur de la source importante (la longueur étant déterminée suivant la direction Y).

De plus, dans le cas où l'anode tournante 12 est mise en rotation par l'arbre moteur d'une pompe turbomoléculaire, l'évacuation thermique de l'anode par rayonnement peut nécessiter un diamètre d'anode important par rapport au diamètre de pompe requis pour le pompage du système ou de la partie du système considérée. Ceci est notamment le cas lorsque le canon à électrons nécessite un pompage propre et que la pompe mettant en rotation l'anode assure uniquement un pompage de la partie de l'enceinte contenant l'anode. Le pompage propre du canon à électrons pourra notamment être nécessaire dans le cas de certaines technologies de canon à électrons nécessitant un vide poussé (de l'ordre de $10^{-7}$ mbars) comme pour les canons à électrons à base de cathodes imprégnées ou à filament LaB6.

La configuration illustrée à la figure 6 sera notamment privilégiée pour limiter l'asymétrie du bloc source et réduire la dimension suivant direction verticale (c'est-à-dire suivant la direction Y) afin d'obtenir un bloc source ayant une dimension de l'ordre de 30 $cm^3$.

De plus, cette solution permet un passage de câbles (câbles haute-tension du canon à électron, connections de la pompe turbomoléculaire avec la pompe primaire) par un côté unique (du coté du système de mise en rotation et du canon à électrons). Ainsi, l'intégration du dispositif dans des diffractomètres RX ou des spectromètres XRF est rendue plus simple.

Il convient de noter que, dans le cas d'une orientation parallèle du canon à électrons, on cherchera à ce que la dimension allongée (W) de la section de cible exposée au faisceau électronique soit disposée radialement par rapport à l'anode et la plus petite dimension (v) soit disposée selon une direction sensiblement tangente à la surface de l'anode (et donc perpendiculaire à l'axe de rotation). Une telle configuration est illustrée sur la figure 3. Elle permet ainsi d'assurer la mise en rotation de l'anode dans le sens de la plus petite dimension de la cible ce qui permet de réduire l'incrément de température de la cible lors de son passage sous le flux électronique.

Comme on l'a déjà indiqué, la collection du flux de rayons X est assurée par une fenêtre de sortie (constituée typiquement d'une fenêtre de béryllium) par laquelle sont émis les rayons X qui seront collectés par l'optique rayons X.

En tenant compte de l'orientation du faisceau électronique sur la cible (c'est-à-dire avec une focalisation sur la base de l'anode), on recherchera ainsi généralement une collection des rayons X selon une direction sensiblement radiale par rapport à la surface de l'anode (pour maintenir un angle d'élévation rasant dans le but de réduire la dimension allongée W). La direction de collection des rayons X pourra être inclinée d'un angle a par rapport à la direction radiale (comme illustré sur la figure 2a).

Il est à noter que dans le cas d'une optique à angle de capture β élevé dans une dimension de l'espace c'est-à-dire avec un angle β typiquement de plusieurs degrés (comme pour les optiques rayons X multicouches produisant un effet bidimensionnel selon une simple réflexion, ou les cristaux doublement courbés), une orientation préférentielle de l'optique sera définie de manière à assurer une distribution de flux de photons relativement homogène en entrée de l'optique. L'application de cette orientation préférentielle sera notamment plus critique dans le cas où l'angle d'élévation $\alpha$ est faible (par exemple 3˚ à 6˚ par rapport à un angle d'élévation de 20˚).

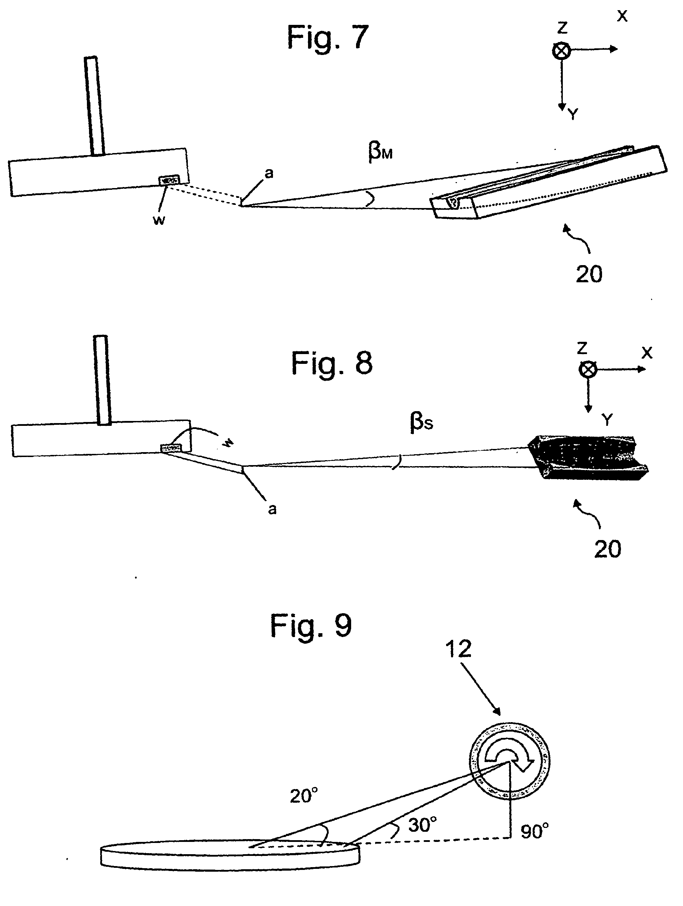

On pourra notamment rechercher une telle orientation privilégiée pour une optique multicouche à simple réflexion pour laquelle l'angle de capture de l'optique suivant la direction sagittale ($\beta_S$ sur la figure 8) pourra être plus important que l'angle de capture suivant la direction méridionale de l'optique ($\beta_M$ sur la figure 7).

On orientera alors l'ensemble optique selon une position horizontale (comme cela est illustré sur la figure 7) pour laquelle la section du faisceau comportant la plus grande distribution angulaire (c'est-à-dire la section pour laquelle la distribution angulaire est $\beta_s$) est sensiblement parallèle au plan de la cible rayons X. Cette position est à distinguer de la position verticale comme illustré sur la figure 8 pour laquelle la section du faisceau comportant la plus grande distribution angulaire (c'est-à-dire la section pour laquelle la distribution angulaire est $\beta_S$) est sensiblement perpendiculaire au plan de la cible rayons X. En réalité les plans sont légèrement inclinés en raison de l'angle d'élévation dans le cas d'une anode tournante comportant une cible 123 qui n'est pas inclinée par rapport à la surface de l'anode (comme illustré sur la figure 2a). En effet, la direction moyenne de l'angle de capture de l'optique est confondue avec la direction moyenne du faisceau de rayons X définie par l'angle d'élévation (on précise à ce titre que les figures 7 et 8 sont des figures destinées à illustrer les angles de collection de l'optique rayons X 20 dans les deux directions de l'espace, et que l'illustration de la direction moyenne du faisceau de rayons X collecté par l'optique n'est pas conforme à la réalité où cette direction est sensiblement alignée par rapport à l'angle d'élévation $\alpha$).

Un positionnement horizontal de l'optique (comme illustré sur la figure 7) permet de s'assurer qu'il n'y a pas une variation importante de l'intensité du foyer pour l'optique placée en avale de la source ce qui permet globalement d'augmenter le flux en sortie d'optique.

*Couplage source-optique*

Le dispositif de délivrance de faisceau rayons X intègre une source telle que décrite ci-dessus couplée à un élément de conditionnement comprenant une optique rayons X adaptée pour produire un effet optique bidimensionnel, tel qu'une focalisation ou une collimation du faisceau rayons X émis de la source dans les deux dimensions de l'espace transversales à la direction moyenne de propagation du faisceau de rayons X

Cette optique rayons X pourra ainsi être une optique polycapillaire ou une optique du type monochromateur. Selon un mode de réalisation privilégié de l'invention, notamment pour des applications monochromatiques, on couplera la source rayons X avec une optique à revêtement multicouche ou un cristal courbé en deux dimensions.

Il apparaît que le couplage de la source à une optique à effet bidimensionnel par simple réflexion est extrêmement avantageux. En effet, une telle optique permet de limiter la perte d'intensité du faisceau de rayons X puisqu'il permet de réaliser un effet optique bidimensionnel avec une unique réflexion.

On pourra en outre prévoir un collimateur 30 en sortie de l'optique rayons X.

*Utilisation du dispositif de délivrance d'un faisceau de rayons X pour des applications avec faisceau collimatant monochromatique*

Certaines applications à haute résolution angulaire telle que des applications SAXS (pour Small Angle X-Rays Scattering, i.e. diffusion de rayons X aux petits angles) ou des applications de diffraction à haute résolution nécessitent un faisceau monochromatique collimatant c'est-à-dire avec une divergence de l'ordre de 0,5 à 1 milliradians.

De telles propriétés de faisceau peuvent être obtenues en couplant une source micro-foyer avec une optique à revêtement multicouche et à effet bidimensionnel. L'optique pourra être une optique à réflexion unique, ou une optique multicouche à configuration du type Kirkpatrick Baez ou Montel dans lesquelles une double réflexion est nécessaire pour obtenir un effet optique bidimensionnel.

Il est à noter que l'évolution des techniques de fabrication des optiques rayons X permet de réduire les erreurs de formes. Il est ainsi possible à l'aide d'une optique multicouche à simple réflexion ayant la forme d'une portion de paraboloide de révolution de collimater un faisceau issu d'un point source avec une faible contribution en divergence résiduelle issue des erreurs de formes de l'optique.

L'utilisation d'une source à plus petit foyer permet de réduire la divergence résiduelle due à la taille de la source.

En effet, la divergence résiduelle de la source est donnée par $\dfrac{d}{p - \dfrac{L}{2}}$, où p est la distance entre le foyer de la source

rayons X et le centre de l'optique, L la longueur de l'optique et d la taille de la source apparente collectée par l'optique.

L'utilisation d'une source de taille réduite permet ainsi d'approcher l'optique de la source et de réduire la dimension de l'optique (ce qui permet de réduire le facteur $p - \dfrac{L}{2}$) sans trop augmenter la divergence résiduelle. En plaçant une optique de petite dimension très proche de la source, on est également en mesure de réduire la taille du faisceau en sortie d'optique pour un angle de capture donné (et donc un flux donné).

Le couplage selon l'invention permet donc d'augmenter la densité de flux pour des applications à haute résolution angulaire en obtenant un faisceau de taille réduite en sortie d'optique par rapport à une configuration basée sur une source à taille de foyer plus importante (100 $\mu$m).

On précise que pour une optique collimatante, la taille D d'un faisceau collimatant en sortie d'optique est

donnée par $\beta = \dfrac{D}{p - \dfrac{L}{2}}$. L'angle de capture $\beta$ est typiquement limité pour des optiques multicouches utilisant des divergences symétriques à des valeurs de l'ordre de 1,5˚ (valeurs typiques pour les optiques réfléchissant les énergies Cuivre K$\alpha$ et Molybdène K$\alpha$). Pour des distances de travail entre l'optique et l'échantillon relativement courtes et pour lesquelles la divergence résiduelle du faisceau en sortie d'optique n'agrandit pas la taille de spot, on peut considérer D comme étant la taille du faisceau sur l'échantillon.

L'invention est particulièrement avantageuse pour des applications nécessitant un faisceau collimaté avec une densité de flux importante ou un flux élevé sur une tache d'échantillon inférieure au millimètre et de l'ordre de quelques centaines de micromètres.

A titre d'exemple, pour des applications de diffraction à haute résolution nécessitant un faisceau monochromatique de 400 $\mu$m et en tenant compte de l'angle de capture maximum des optiques à revêtements multicouche qui est de l'ordre de 1,5˚, on calcul ainsi une distance minimum de positionnement de l'entrée de l'optique par rapport au foyer de la source qui est de 2 cm environ. Pour des divergences de faisceaux requises de l'ordre de 1 milliradians et en tenant compte de cette distance source-optique on calcul ainsi une taille de source maximum de 20 $\mu$m.

L'invention s'applique ainsi avantageusement pour des applications à haute résolution angulaire nécessitant un faisceau de divergence comprise entre 0,5 et 1 milliradians sur un échantillon ayant une dimension comprise entre 100 $\mu$m et 1 mm. Selon une application privilégiée de l'invention la taille de source (c'est-à-dire le foyer apparent de la source vu par l'optique) sera comprise entre 20 et 30 $\mu$m et l'optique rayons X sera positionnée à une distance comprise entre 2 et 5 cm (distance entre le foyer de la source rayons X et l'entrée de l'optique rayons X).

*Utilisation du dispositif de délivrance d'un faisceau de rayons X monochromatique de convergence symétrique pour des applications de diffraction monocristaux ou pour des applications de diffraction RX sur films minces*

L'invention pourra s'appliquer avantageusement à des applications nécessitant un faisceau monochromatique ayant une convergence symétrique de l'ordre de 0,2˚ à 0,3˚ pour des tailles d'échantillons comprises entre 30 et 200 $\mu$m. Il pourra ainsi s'agir de monocristaux de protéines ou de zones tests sur des wafers de silicium.

Le système de délivrance de faisceau rayons X comprend alors une optique à revêtement multicouche focalisante. Selon une application privilégiée de l'invention, cette optique pourra être une optique simple réflexion, ayant par exemple une forme toroïdale ou ellipsoïdale de révolution, avec un revêtement multicouche à gradient.

Le flux utile F sur un échantillon de dimension donnée D pour un ensemble source optique intégrant une source ponctuelle et une optique focalisante idéale (sans aberration de forme et avec une réflectivité optimisée) en deux dimensions est donnée par la formule suivante: $F = B \times \gamma^2 \times D^2$ où B est la brilliance de la source, $\gamma$ la convergence du faisceau en sortie d'optique.

Il est à noter que l'angle de capture $\beta$ maximum pour des optiques multicouches à convergence symétrique est de l'ordre de 1,5˚ (limites sur les gradients de revêtements multicouches pour maintenir la loi de Bragg à la surface du miroir).

Le système de délivrance de faisceau rayons X selon l'invention permet d'augmenter le flux utile pour les applications de convergences précisées ci-dessus (c'est-à-dire des convergences de faisceaux symétriques de l'ordre de 0,2 à 0,3˚). A titre d'exemple pour des applications de diffraction avec une convergence requise de 0,3˚ pour un échantillon de 150 μm l'invention peut-être appliquée avec une optique à grandissement 5. La taille de source requise est alors de 30 μm. On précisera à ce titre que pour les applications nécessitant de focaliser sur une distance de 20 à 30 cm par rapport à l'optique on devra alors positionner le centre de l'optique à une distance comprise entre 4 et 6 cm du foyer de la source rayons X. Le système tel que revendiqué présentera ainsi un gain de flux utile proportionnel au gain de brillance de la source.

L'invention présentera notamment un avantage particulier pour les applications de diffraction sur des échantillons de 30 à 50 μm pour lesquelles des optiques à grandissement faibles pourront être utilisées.

*Utilisation du dispositif de délivrance d'un faisceau de rayons X à convergence ou divergence assymétrique*

L'invention s'applique notamment à des applications de diffractions rayons X nécessitant un faisceau monochromatique à convergence asymétrique (c'est-à-dire avec une asymétrie d'un facteur 2 ou plus) nécessitant une section de faisceau de l'ordre de 30 à 100 μm au niveau de l'échantillon (l'échantillon étant typiquement placé à une distance d'environ 20 à 30 cm).

Pour ce type d'applications, le système de délivrance de faisceau rayons-X sera typiquement couplé à une optique à simple réflexion du type optique à revêtement multicouche ou cristal doublement courbé. L'invention se révèle particulièrement avantageuse dans le sens où l'utilisation d'une source de petite dimension à faible divergence résiduelle permet d'utiliser efficacement des fentes de définition en sortie d'optique (les fentes de définition étant utilisées pour définir la divergence asymétrique).

*Utilisation du dispositif de délivrance d'un faisceau de rayons X pour des applications de métrologie par rayons X*

Selon un mode de réalisation particulier, on utilise le dispositif de délivrance pour des applications de métrologie par rayons X pouvant nécessiter des variations d'inclinaison du faisceau de rayons X émis par la source par rapport à un échantillon maintenu en position horizontale (comme par exemple pour un wafer de silicium). Cela peut-être le cas notamment pour les applications de métrologie rayons X pour fabrication de semi-conducteurs intégrant différentes capacités de mesures pour un même échantillon comme par exemple :

- réflectométrie rayons X à incidence rasante par rapport à l'échantillon,
- ou diffraction rayons X en incidence oblique (de l'ordre de quelques dizaines de degrés) pour analyse de texture.

Typiquement pour ces applications, le wafer de silicium est maintenu en position horizontale (celui-ci peut-être déplacé en translation).

Puisque le wafer ne peut pas être incliné, il convient de modifier l'incidence du faisceau de rayons X arrivant sur le wafer, pour pouvoir effectuer les différentes mesures requises nécessitant des incidences de faisceau différentes.

Pour ce faire, il est proposé de positionner le dispositif de sorte que l'axe de rotation de l'anode soit sensiblement horizontal, plus précisément pour que cette axe de rotation soit sensiblement parallèle au plan moyen du wafer.

En outre, le dispositif est monté mobile en rotation autour de ce même axe de rotation de manière à permettre la rotation de l'ensemble du dispositif. La configuration particulière du dispositif de l'invention selon laquelle le canon à électrons est positionné de manière à pouvoir focaliser un faisceau électronique sur la base de l'anode permet, par une rotation du dispositif de délivrance de rayons X autour de l'axe de rotation de l'anode de modifier l'incidence du faisceau frappant le wafer à traiter (comme cela est illustré sur la figure 9).

Cette configuration sera notamment mise en oeuvre avantageusement pour cette application dans le cas où l'anode (12) comprend une cible (123) inclinée par rapport à la surface de l'anode selon l'angle d'élévation souhaité pour le faisceau de rayons X collectée par l'optique rayons X (cas de la figure 2b). En effet, la mise en rotation du dispositif selon l'axe de rotation de l'anode tournante dans le cas où le faisceau de rayons X est perpendiculaire à l'axe de rotation permet un meilleur contrôle de l'angle d'incidence sur l'échantillon.

Cela est particulièrement avantageux puisque cette configuration ne modifie pas l'inertie de l'arbre moteur et de l'anode tournante et ne sollicite donc pas les moyens de mise en rotation de l'anode tournante et notamment les paliers magnétiques en modifiant l'inclinaison du faisceau par rapport à l'échantillon horizontal.

En effet, l'axe de rotation de l'anode tournante ne nécessite pas d'être incliné par rapport à une inclinaison d'origine lors d'un changement de configurations correspondant à différents angles d'incidence du faisceau de rayons X sur l'échantillon.

Ainsi pour assurer les variations d'angle d'incidence illustrées sur la figure 9, on pourra notamment faire tourner le système de délivrance de faisceau rayons X selon l'axe de rotation de l'anode 12. Une telle disposition couplée à la configuration dite parallèle décrite plus haut permet de ne pas modifier l'inertie de l'anode contrairement à ce qui pourrait être nécessaire pour une configuration orthogonale où le canon à électrons est en position orthogonale par rapport à l'axe de rotation de la cible.

Il est à noter que l'ajustement de l'incidence du faisceau de rayons X par une rotation selon l'axe de l'arbre moteur devra s'accompagner d'une translation du système de délivrance de faisceau rayons X afin d'ajuster la distance entre l'optique et le wafer. Ce déplacement additionnel en translation du système de délivrance de faisceau rayons X par rapport au wafer pourra également s'effectuer au niveau du wafer par un déplacement de ce dernier.

*Système de délivrance de faisceau rayons X avec asservissement du réglage optique*

Comme indiqué ci-dessus, le système de délivrance de faisceau rayons X pourra être destiné à des applications de métrologie rayons X pour l'industrie semi-conducteur. Il en résulte une contrainte de stabilité spatiale au niveau de la source qui est importante (la stabilité spatiale étant assimilée à des variations de position du foyer de la source) afin de maintenir le faisceau stable par rapport à une zone de l'échantillon. On recherchera ainsi typiquement une stabilité spatiale de la position du foyer de la source de quelques micromètres.

Or, le système de délivrance de faisceau rayons X considéré dans l'invention intègre une anode tournante mise en rotation à des fréquences très élevées (supérieures à 20 000 tours/minute comme indiqué ci-dessus). De plus, en raison d'un refroidissement de l'anode par émission, la température moyenne de l'anode est maintenue en continu à une température élevée (quelques centaines de degrés typiquement). Il en ressort que la source rayons X est soumise à des contraintes de fluages pouvant entraîner des variations de la position du foyer sur le long-terme.

De plus compte-tenu des vitesses de rotation élevées, des vibrations peuvent être générées dans le système conduisant à un léger désalignement du faisceau électronique par rapport à la cible. Par ailleurs l'usure de la cathode du canon à électrons est susceptible à terme d'occasionner un désalignement du canon à électrons.

Pour compenser de telles variations positionnelles de la source, le système de délivrance de faisceau rayons X tel que considéré dans l'invention intègre un système d'asservissement permettant de contrôler un ou des paramètres du faisceau en sortie du système de calculer la commande appropriée à appliquer sur au moins un actionneur, cet actionneur étant un moyen de réglage motorisé de l'optique rayons X placé en sortie de la source permettant de compenser la variation positionnelle de la source.

Plus particulièrement l'actionneur est un moyen de déplacement de l'ensemble optique suivant un axe donné. Le système tel que considéré dans l'invention pourra comporter deux actionneurs correspondant à deux moyens de réglages motorisés de l'ensemble optique (suivant un axe Y et un axe Z comme illustré sur la figure 7 et 8).

Selon une application privilégiée de l'invention, le système de délivrance de faisceau rayons X intègre un miroir à simple réflexion ce qui rend plus simple plus rapide et plus efficace l'asservissement du réglage spatiale du faisceau par rapport à un système intégrant un miroir rayons X à effet 2D de type Kirkpatrick-Baez ou Montel.

En effet, suivant le type de variation de la source qui peut-être plutôt unidimensionnel, le système tel que considéré dans l'invention pourra utiliser un seul actionneur c'est-à-dire un seul réglage motorisé (c'est-à-dire suivant un seul axe) pour ajuster la position de l'optique.

De plus, même dans le cas d'un ajustement en deux dimensions la procédure d'alignement du miroir à simple réflexion est plus efficace que pour un miroir à double réflexion.

Dans le cas où le paramètre critique contrôlé est le flux, le système de délivrance de faisceau rayons X pourra inclure une chambre d'ionisation si possible au plus près du point image. Cette chambre d'ionisation pourra ainsi être incluse au système de délivrance de faisceau. Dans le cas où le système de délivrance de faisceau rayons X intègre un collimateur en sortie d'optique, la chambre d'ionisation pourra être placée dans le collimateur entre l'optique et la fenêtre de sortie du collimateur.

Dans le cas où le paramètre critique contrôlé est la position du spot sur l'échantillon, l'unité de contrôle du système de délivrance de faisceau pourra être reliée à un système de visualisation microscopique visualisant périodiquement la fluorescence générée par le faisceau rayons X sur une pièce fluorescente d'étalonnage qui pourra être une partie de wafers dans le cas d'un système destiné à un équipement de métrologie semi-conducteur.

Le lecteur aura compris que de nombreuses modifications peuvent être apportées sans sortir matériellement des nouveaux enseignements et des avantages décrits ici tant que defini par les revendications. Par conséquent, toutes les modifications de ce type sont destinées à être incorporées à l'intérieur de la portée du dispositif de délivrance d'un faisceau de rayons X à haute énergie décrit ci-dessus, ainsi que de ses utilisations.

**Revendications**

**1.** Dispositif de délivrance d'un faisceau de rayons X à des énergies supérieures à 4keV, comprenant :

- une source de rayons X (10) comprenant un canon à électrons (111) adapté pour générer un faisceau continu d'électrons sur une région cible (121) d'une anode (12) pour une émission de rayons X par l'anode (12),

o ladite anode (12) formant une pièce de révolution d'un diamètre compris entre 100 et 250 millimètres, et étant montée solidaire d'un arbre moteur (16) de manière à être entrainée en rotation par un système de mise en rotation (15),

o le canon à électrons (111) et l'anode (12) étant agencés dans une enceinte sous vide (13), ladite enceinte (13) comprenant une fenêtre de sortie (14) pour transmettre un faisceau de rayons X émis par l'anode (12) en dehors de l'enceinte (13),

- un moyen de conditionnement (20) du faisceau de rayons X émis à travers la fenêtre de sortie, le moyen de conditionnement comprenant une optique rayons X (20) adaptée pour conditionner le faisceau de rayons X émis selon un effet optique bidimensionnel,

**caractérisé en ce que**

- le canon à électrons (111) est prévu pour émettre un faisceau d'électrons d'une puissance inférieure à 400 watts, et comprend des moyens (112) pour focaliser ledit faisceau d'électrons sur la région cible (121) selon une forme sensiblement allongée définie par une petite dimension (v) et une grande dimension (W), la petite dimension (v) étant comprise entre 10 et 30 micromètres et la grande dimension (W) étant 3 à 20 fois plus grande que la petite dimension (v),

- l'anode tournante (12) comprend un système de refroidissement (124) par émission pour évacuer par rayonnement une partie d'énergie transmise par le faisceau d'électrons à l'anode,

- le système de mise en rotation (15) comprend un rotor d'une pompe turbomoléculaire assurant un vide secondaire dans au moins une partie de l'enceinte et comprend un moteur à paliers magnétiques prévu pour une mise en rotation de l'anode tournante (12) à une vitesse supérieure à 20 000 tours/minute, et

- la fenêtre de sortie (14) est agencée de manière à transmettre un faisceau de rayons X émis par l'anode (12) de sorte que le faisceau de rayons X émis vers le moyen de conditionnement (20) soit défini par un foyer sensiblement ponctuel de dimension correspondant sensiblement à la petite dimension (v) de la forme de la région cible.

2. Dispositif selon la revendication 1, **caractérisé en ce que** l'optique rayons X (20) comprend un revêtement multicouche.

3. Dispositif selon l'une quelconque des revendications 1 à 2, **caractérisé en ce que** la fenêtre de sortie (14) est agencée dans l'enceinte (13) de manière à transmettre un faisceau de rayons X dont la direction moyenne forme un angle ($\alpha$) par rapport au plan moyen de la région cible compris entre 3˚ et 20˚, et préférentiellement entre 6˚ et 12˚.

4. Dispositif selon l'une des revendications 1 à 3, **caractérisé en ce que** le canon à électrons (111) est agencé de sorte que le faisceau d'électrons soit sensiblement parallèle à l'arbre moteur (16).

5. Dispositif selon l'une quelconque des revendications 1 à 4, **caractérisé en ce que** l'anode (12) a une forme sensiblement cylindrique définie par deux surfaces circulaires formant les bases de l'anode (12), les deux surfaces étant réunies par une paroi latérale formant la tranche de l'anode (12), le canon à électrons (111) étant agencé de manière à focaliser le faisceau d'électrons sur l'une des deux bases l'anode (12).

6. Dispositif selon l'une des revendications précédentes **caractérisé en ce que** l'anode comprend une portion inclinée au niveau de la région cible de sorte que le faisceau de rayons X soit collecté par les moyens de conditionnement selon une direction moyenne sensiblement perpendiculaire à l'axe de rotation de l'anode.

7. Dispositif selon la revendication 6 **caractérisé en ce que** le moyen de conditionnement (20) est agencé de sorte que la direction moyenne du faisceau de rayons X collecté par l'optique soit sensiblement radiale par rapport à la surface de l'anode.

8. Dispositif selon l'une des revendications 5 à 7, **caractérisé en ce que** le canon à électrons (111) comprend des moyens (112) pour focaliser le faisceau d'électrons de sorte que la grande dimension (W) de la région cible soit disposée radialement par rapport à l'anode de manière à ce que la rotation de l'anode se fasse dans le sens de la petite dimension (v).

9. Dispositif selon l'une quelconque des revendications 4 à 8, **caractérisé en ce que** le canon à électrons (111) est agencé du même côté que le système de mise en rotation (15).

**10.** Dispositif selon l'une quelconque des revendications 4 à 9, **caractérisé en ce que** le moyen de conditionnement (20) est agencé de sorte que l'entrée de l'optique rayons X (20) soit placée à une distance du foyer de la source de rayons X (10) comprise entre 10 et 30 millimètres.

**11.** Dispositif selon l'une quelconque des revendications précédentes, **caractérisé en ce que** l'anode (12) comprend une couche de diamant (125) agencée sous la cible (123) définie par la région cible (121).

**12.** Dispositif selon la revendication 11, **caractérisé en ce que** l'anode a une cible (123) ayant une épaisseur inférieure à 5 $\mu$m.

**13.** Dispositif selon l'une quelconque des revendications précédentes, **caractérisé en ce qu'**il comprend en outre des moyens de contrôle de la position du foyer, et un système d'asservissement comprenant des moyens de déplacement de l'optique rayons X (20), les moyens de déplacement étant aptes à modifier le positionnement de l'optique rayons X (20) par rapport au foyer en fonction de la variation de la position du foyer déterminée par les moyens de contrôle.

**14.** Système de métrologie par rayons X pour un échantillon, comprenant un dispositif de délivrance d'un faisceau de rayons X selon l'une des revendications 4 à 13, **caractérisé en ce que** le système de délivrance de faisceau rayons X est positionné de telle sorte que l'arbre moteur (16) de l'anode (12) soit sensiblement parallèle à un plan moyen de l'échantillon.

**Claims**

**1.** A device to deliver an X-ray beam at energies greater than 4 keV, comprising:

• an X-ray source (10) comprising an electron gun (111) adapted to generate a continuous beam of electrons onto a target region (121) of an anode (12) for X-ray emission by the anode (12), wherein

- said anode (12) forms a solid of revolution of a diameter between 100 and 250 millimetres, and is fixedly connected to a motor shaft (16) so that it is driven in rotation by a rotation system (15),and
- the electron gun (111) and the anode (12) are arranged in a vacuum chamber (13), said chamber (13) comprising an exit window (14) to transmit an X-ray beam emitted by the anode (12) outside of the chamber (13),

• conditioning means (20) to condition the X-ray beam emitted through the exit window, the conditioning means comprising an X-ray optic (20) adapted to condition the emitted X-ray beam with a two-dimensional optic effect,

wherein:

• the electron gun (111) is designed to emit an electron beam of a power less than 400 watts, and comprises means (112) to focus said electron beam on the target region (121) in a substantially elongate shape defined by a small dimension (v) and a large dimension (W), wherein the small dimension (v) is comprised between 10 and 30 micrometres and the large dimension (W) is 3 to 20 times greater than the small dimension (v),
• the rotating anode (12) comprises an emission cooling system (124) to evacuate, by radiation, part of the energy transmitted by the electron beam to the anode,
• the rotation system (15) comprises a rotor of a turbomolecular pump enabling a high-vacuum in at least part of the chamber and a motor with magnetic bearings designed to set the rotating anode (12) in rotation at a speed of more than 20,000 rpm, and
• the exit window (14) is arranged so as to transmit an X-ray beam emitted by the anode (12) so that the X-ray beam emitted towards the conditioning means (20) is defined by a substantially point-size focal spot of dimension substantially corresponding to the small dimension (v) of the shape of the target region.

**2.** The device of claim 1, wherein the X-ray optic (20) comprises a multilayer coating.

**3.** The device of any of claims 1 to 2, wherein the exit window (14) is arranged in the chamber (13) so as to transmit an X-ray beam whose mean direction forms an angle ($\alpha$) with the mean plane of the target region of between 3˚ and 20˚, and preferably between 6˚ and 12˚.

4. The device of any of claims 1 to 3, wherein the electron gun (111) is arranged so that the electron beam is substantially parallel to the motor shaft (16).

5. The device of any of claims 1 to 4, wherein the anode (12) is of a substantially cylindrical shape defined by two circular surfaces forming the bases of the anode (12), the two surfaces being joined by a side wall forming the edge of the anode (12), the electron gun (111) being arranged so as to focus the electron beam on one of the two bases of the anode (12).

6. The device of any of the preceding claims, wherein the anode comprises an inclined portion at the target region so that the X-ray beam is collected by the conditioning means in a mean direction substantially perpendicular to the axis of rotation of the anode.

7. The device of claim 6, wherein the conditioning means (20) are arranged so that the mean direction of the X-ray beam collected by the optic is substantially radial with respect to the surface of the anode.

8. The device of any of claims 5 to 7, wherein the electron gun (111) comprises means (112) to focus the electron beam so that the large dimension (W) of the target region lies radial to the anode, allowing rotation of the anode to occur in the direction of the small dimension (v).

9. The device of any of claims 4 to 8, wherein the electron gun (111) is arranged on the same side as the rotation system (15).

10. The device of any of claims 4 to 9, wherein the conditioning means (20) are arranged so that the inlet to the X-ray optic (20) is placed at a distance from the focal spot of the X-ray source (10) of between 10 and 30 millimetres.

11. The device of any of the preceding claims, wherein the anode (12) comprises a diamond layer (125) arranged beneath the target (123) defined by the target region (121).

12. The device of claim 11, wherein the anode has a target (123) of a thickness less than 5 $\mu$m.

13. The device of any of the preceding claims, further comprising means to control the position of the focal spot, and a feed-back system comprising means to move the X-ray optic (20), the movement means being capable of modifying the positioning of the X-ray optic (20) with respect to the focal spot in relation to variations in the position of the focal spot determined by the control means.

14. An X-ray metrology system for a sample, comprising an X-ray beam delivery device according to any of claims 4 to 13, wherein the X-ray beam delivery system is positioned so that the motor shaft (16) of the anode (12) lies substantially parallel to a mean plane of the sample.

**Patentansprüche**

1. Vorrichtung zur Bereitstellung eines Röntgenstrahls mit Energien von mehr als 4 keV, Folgendes umfassend:

   - eine Röntgenquelle (10), die eine Elektronenkanone (111) umfasst, die dafür eingerichtet ist, einen kontinuierlichen Elektronenstrahl zu erzeugen und auf eine Zielregion (121) einer Anode (12) zu lenken, um durch die Anode (12) Röntgenstrahlen zu emittieren, wobei

     ○ die Anode (12) ein Rotationsteil mit einem Durchmesser zwischen 100 und 250 Millimeter bildet und fest auf einer Motorwelle (16) montiert ist, und dies derart, dass sie durch ein Drehantriebssystem (15) drehend angetrieben wird,
     ○ die Elektronenkanone (111) und die Anode (12) in einer Kammer (13) unter Vakuum angeordnet sind, wobei die Kammer (13) ein Austrittsfenster (14) umfasst, um einen von der Anode (12) emittierten Röntgenstrahl aus der Kammer (13) heraus zu übertragen,

   - ein Mittel zur Aufbereitung (20) des durch das Austrittsfenster emittierten Röntgenstrahls, wobei das Aufbereitungsmittel eine röntgenoptische Vorrichtung (20) umfasst, die dafür eingerichtet ist, den emittierten Röntgenstrahl gemäß einem zweidimensionalen optischen Effekt aufzubereiten,

und **dadurch gekennzeichnet, dass**

- die Elektronenkanone (111) dafür vorgesehen ist, einen Elektronenstrahl mit einer Leistung von weniger als 400 Watt zu emittieren, und Mittel (112) umfasst, um den Elektronenstrahl auf die Zielregion (121) zu fokussieren, und dies entsprechend einer im Wesentlichen länglichen Form, die durch eine kleine Abmessung (v) und eine große Abmessung (W) definiert wird, wobei die kleine Abmessung (v) zwischen 10 und 30 Mikrometer liegt und die große Abmessung (W) 3 bis 20 mal größer ist als die kleine Abmessung (v),
- die drehende Anode (12) ein System (124) zur Kühlung durch Emission umfasst, um durch Strahlung einen Teil der Energie abzuführen, die durch den Elektronenstrahl auf die Anode übertragen wird,
- das Drehantriebssystem (15) einen Rotor einer Turbomolekularpumpe umfasst, der in wenigstens einem Teil der Kammer ein Hochvakuum sicherstellt, und einen Motor mit Magnetlagern umfasst, der für eine Rotation der drehenden Anode (12) mit einer Geschwindigkeit von mehr als 20 000 Umdrehungen/Minute vorgesehen ist, und
- das Austrittsfenster (14) so konzipiert ist, dass es einen von der Anode (12) emittierten Röntgenstrahl derart überträgt, dass der in Richtung des Aufbereitungsmittels (20) emittierte Röntgenstrahl durch einen im Wesentlichen punkförmigen Brennpunkt definiert ist, mit einer Abmessung, die im Wesentlichen der kleinen Abmessung (v) der Form der Zielregion entspricht.

2. Vorrichtung nach Anspruch 1, **dadurch gekennzeichnet, dass** die röntgenoptische Vorrichtung (20) eine mehrlagige Beschichtung umfasst.

3. Vorrichtung nach einem der Ansprüche 1 bis 2, **dadurch gekennzeichnet, dass** das Austrittsfenster (14) auf solche Weise in der Kammer (13) ausgeführt ist, dass es einen Röntgenstrahl überträgt, dessen mittlere Richtung einen Winkel ($\alpha$) relativ zur mittleren Ebene der Zielregion bildet, der zwischen 3˚ und 20˚ und vorzugsweise zwischen 6˚ und 12˚ liegt.

4. Vorrichtung nach einem der Ansprüche 1 bis 3, **dadurch gekennzeichnet, dass** die Elektronenkanone (111) so konzipiert ist, dass der Elektronenstrahl im Wesentlichen parallel zur Motorwelle (16) ist.

5. Vorrichtung nach einem der Ansprüche 1 bis 4, **dadurch gekennzeichnet, dass** die Anode (12) eine im Wesentlichen zylindrische Form hat, die durch zwei kreisförmige Flächen definiert wird, die die Basisflächen der Anode (12) bilden, wobei die beiden Flächen durch eine Seitenwand miteinander verbunden sind, die den Rand der Anode (12) bildet, und wobei die Elektronenkanone (111) so konzipiert ist, dass sie den Elektronenstrahl auf eine der beiden Basisflächen der Anode (12) fokussiert.

6. Vorrichtung nach einem der vorhergehenden Ansprüche, **dadurch gekennzeichnet, dass** die Anode im Bereich der Zielregion einen geneigten Abschnitt umfasst, und dies derart, dass der Röntgenstrahl durch das Aufbereitungsmittel in einer mittleren Richtung erfasst wird, die im Wesentlichen senkrecht zur Rotationsachse der Anode steht.

7. Vorrichtung nach Anspruch 6, **dadurch gekennzeichnet, dass** das Aufbereitungsmittel (20) so konzipiert ist, dass die mittlere Richtung des von der Optik erfassten Röntgenstrahls im Wesentlichen radial zur Fläche der Anode ist.

8. Vorrichtung nach einem der Ansprüche 5 bis 7, **dadurch gekennzeichnet, dass** die Elektronenkanone (111) ein Mittel (112) umfasst, um den Elektronenstrahl so zu fokussieren, dass die große Abmessung (W) der Zielregion in Bezug auf die Anode radial angeordnet ist, derart, dass die Drehung der Anode in der Richtung der kleinen Abmessung (v) geschieht.

9. Vorrichtung nach einem der Ansprüche 4 bis 8, **dadurch gekennzeichnet, dass** die Elektronenkanone (111) auf derselben Seite wie das Drehantriebssystem (15) angeordnet ist.

10. Vorrichtung nach einem der Ansprüche 4 bis 9, **dadurch gekennzeichnet, dass** das Aufbereitungsmittel (20) so konzipiert ist, dass der Eintritt der röntgenoptischen Vorrichtung (20) in einem Abstand vom Brennpunkt der Röntgenquelle (10) angeordnet ist, der zwischen 10 und 30 Millimeter liegt.

11. Vorrichtung nach einem der vorhergehenden Ansprüche, **dadurch gekennzeichnet, dass** die Anode (12) eine Diamantschicht (125) umfasst, die unter dem Ziel (123) angeordnet ist, das durch die Zielregion (121) definiert wird.

12. Vorrichtung nach Anspruch 11, **dadurch gekennzeichnet, dass** die Anode ein Ziel (123) mit einer Dicke von weniger als 5 µm hat.

**13.** Vorrichtung nach einem der vorhergehenden Ansprüche, **dadurch gekennzeichnet, dass** es außerdem ein Mittel zur Steuerung der Position des Brennpunkts hat, sowie ein geregeltes System, das ein Mittel zum Verschieben der röntgenoptischen Vorrichtung (20) umfasst, wobei das Mittel zum Verschieben dafür eingerichtet ist, die Position der röntgenoptischen Vorrichtung (20) relativ zum Brennpunkt zu verändern, und dies in Abhängigkeit von der Positionsänderung des Brennpunkts, die vom Steuerungsmittel festgestellt wird.

**14.** System zur Messtechnik mit Röntgenstrahlen für eine Probe, das eine Vorrichtung zur Bereitstellung eines Röntgenstrahls nach einem der Ansprüche 4 bis 13 umfasst, **dadurch gekennzeichnet, dass** das System zur Bereitstellung eines Röntgenstrahls so positioniert ist, dass die Motorwelle (16) der Anode (12) im Wesentlichen parallel zu einer mittleren Ebene der Probe ist.

# Fig. 1

# Fig. 2a

# Fig. 2b

# Fig. 3

# Fig. 4

# Fig. 5

# Fig. 6

## Fig. 7

## Fig. 8

## Fig. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6823042 B
- US 20060013364 A